# EUROPÄISCHE PATENTSCHRIFT

(11) **EP 3 919 801 B1**
(45) Veröffentlichungstag und Bekanntmachung des Hinweises auf die Patenterteilung: **31.07.2024**
(21) Anmeldenummer: 21154995.1
(22) Anmeldetag: 03.02.2021
(51) Int. Cl.: F16P 3/14

(54) **ÜBERWACHUNGSEINRICHTUNG**
MONITORING DEVICE
DISPOSITIF DE SURVEILLANCE

(30) Priorität: 02.06.2020 DE 202020103157 U
(43) Veröffentlichungstag der Anmeldung: 08.12.2021
(73) Patentinhaber: Leuze electronic GmbH + Co. KG, 73277 Owen/Teck (DE)
(72) Erfinder: Brunner, Rolf, 82223 Eichenau (DE)
(74) Vertreter: Ruckh, Rainer Gerhard

(56) Entgegenhaltungen:
- EP-A1- 2 249 075
- EP-A1- 3 339 715
- EP-A1- 3 415 804
- EP-A1- 3 587 894
- DE-A1- 102017 108 531

## Beschreibung

Die Erfindung betrifft eine Überwachungseinrichtung.

Derartige Überwachungseinrichtungen können zur Sicherung von Gefahrenbereichen an stationären Maschinen oder Anlagen vorgesehen sein, wobei dort ein Gefahrenbereich, in welchem von der Maschine oder Anlage gefahrbringende Bewegungen ausgeführt werden, abzusichern ist.

Weiterhin können derartige Überwachungseinrichtungen zur Sicherung des Vorfelds an Fahrzeugen eingesetzt werden, um einen Kollisionsschutz für das Fahrzeug zu realisieren.

In beiden Fällen ist es bekannt, distanzmessende optische Sensoren zur Überwachung von Gefahrenbereichen einzusetzen, wobei diese beispielsweise als Flächendistanzsensor, das heißt als scannende Distanzsensoren, ausgebildet sein können.

Zur Anpassung an verschiedene beziehungsweise sich ändernde Gefahrenbereiche ist es bekannt, dass im optischen Sensor unterschiedliche Schutzfelder gespeichert sind. Je nach Gefahrensituation wird im optischen Sensor ein Schutzfeld aktiviert, sodass innerhalb dieses vorgegebenen Schutzfelds eine Objektüberwachung erfolgt.

Im optischen Sensor wird dann abhängig davon, ob im vorgegebenen Schutzfeld ein Objekt detektiert wird, ein binäres Schaltsignal mit einem entsprechenden Schaltzustand erzeugt. Nimmt das Schaltsignal bei einer Objektdetektion den Schaltzustand "Objekt vorhanden" ein, wird eine Sicherheitsfunktion ausgelöst, wodurch ein sicherer Betriebszustand herbeigeführt wird, der Gefährdungen von Personen vermeidet. Bei der Überwachung einer gefahrbringenden stationären Maschine oder Anlage kann die Sicherheitsfunktion darin bestehen, die Maschine oder Anlage stillzusetzen. Bei der Überwachung eines Fahrzeugs kann die Sicherheitsfunktion darin bestehen, das Fahrzeug anzuhalten.

Ein Problem bei derartigen Überwachungseinrichtungen besteht darin, dass neben sicherheitskritischen Objekten, insbesondere Personen, auch zulässige Objekte in das Schutzfeld des optischen Sensors eintreten, die keine Gefährdungen verursachen.

Beispiele hierfür sind die Zuführung von Materialien wie Werkstücken zu der Maschine oder Anlage, damit diese Arbeitsprozesse ausführen kann. Ein weiteres Beispiel ist das Annähern einer mit dem optischen Sensor ausgerüsteten mobilen Maschine gegen ein stationäres Hindernis wie eine Wand.

In diesem Fall ist bei Eindringen eines derartigen Objekts in das Schutzfeld die Auslösung der Sicherheitsfunktion unnötig und würde lediglich die Verfügbarkeit der zu überwachenden Maschine, Anlage oder mobilen Maschine verringern.

Ein Zugangsabsicherungssystem, bei dem ein derartiges unnötiges Auslösen von Sicherheitsfunktion vermieden werden soll, ist aus der EP 2 249 075 B1 bekannt. Das dort beschriebene Zugangsabsicherungssystem weist einen Sicherheits-Laserscanner auf, der ein Schutzfeld und mindestens ein erstes und ein zweites Warnfeld, die sich in zumindest einer Richtung über das Schutzfeld hinaus erstrecken und außerhalb des Schutzfelds zumindest teilweise nicht überlappen, aufweist. Ferner besitzt der Sicherheits-Laserscanner mindestens eine Interface-Schnittstelle. Zum erfindungsgemäßen Zugangssicherungssystem gehört ferner ein Controller mit mindestens einer Interface-Schnittstelle, die mit der mindestens einen Interface-Schnittstelle des Sicherheits-Laserscanners zur Übermittlung von Messergebnissen des Sicherheits-Laserscanners an den Controller und/oder von Steuerbefehlen des Controllers an den Sicherheits-Laserscanner in Signalkommunikation steht. Die Schaltlogik des Controllers ist dabei so aufgebaut, dass beim Eindringen eines Objekts in das Schutzfeld eine Sicherheitsfunktion ausgelöst wird, die jedoch dann unterdrückt wird, wenn zuvor ein Eindringen des Objekts sowohl in das erste Warnfeld als auch in das zweite Warnfeld festgestellt wurde.

Die DE 10 2017 108 531 A1 betrifft ein Sicherungssystem für eine Objektförderanlage, das wenigstens einen Sicherheitssensor und eine elektronische Steuereinrichtung, die mit dem Sicherheitssensor in Signalverbindung steht, umfasst. Der Sicherheitssensor bildet im Betrieb wenigstens zwei Überprüfungs-Schutzfelder aus, deren Verletzung durch Eindringen eines Objekts jeweils erfasst wird. Der Sicherheitssensor ist derart angeordnet und ausgebildet, dass die Überprüfungs-Schutzfelder zumindest in einem Prüfbereich bezüglich einer Förderrichtung der Objektförderanlage einen Querversatz aufweisen. Die elektronische Steuereinrichtung ist dazu ausgebildet, bei einem Durchgang eines Objekts durch den Prüfbereich die zeitliche Abfolge, in welcher die Überprüfungs-Schutzfelder verletzt und/oder nach einer Verletzung wieder freigegeben werden, zu ermitteln, die ermittelte zeitliche Abfolge mit einer vorgegebenen zeitlichen Abfolge zu vergleichen und eine Sicherheitsfunktion auszulösen, wenn die ermittelte zeitliche Abfolge von der vorgegebenen zeitlichen Abfolge abweicht.

Der Erfindung liegt die Aufgabe zugrunde eine Überwachungseinrichtung der eingangsgenannten Art bereitzustellen, mittels derer eine verbesserte Sicherung von Gefahrenbereichen ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem optischen Sensor, mittels dessen eine Objektüberwachung innerhalb eines Schutzfeldes durchgeführt wird. Mit dem optischen Sensor wird zusätzlich eine Objektüberwachung innerhalb zweier Konturerkennungsfelder durchgeführt, wobei die Konturerkennungsfelder über das Schutzfeld hervorstehen und dort zumindest teilweise nicht überlappen. Eine Auswerteeinheit ist vorgesehen, in welcher bei Registrieren eines Objekteingriffs im Schutzfeld eine Sicherheitsfunktion ausgelöst wird. Diese Sicherheitsfunktion wird dann unterdrückt, wenn zuvor innerhalb eines vorgegebenen Zeitintervalls zuerst in einem ersten Konturerkennungsfeld und dann im zweiten Konturerkennungsfeld ein Obj ekteingriff registriert wurde.

Die Grundfunktion der erfindungsgemäßen Überwachungseinrichtung besteht darin, mit dem optischen Sensor eine Schutzfeldüberwachung durchzuführen, wodurch ein Gefahrenbereich an einer gefahrbringenden Anlage oder Maschine abgesichert wird.

Besonders vorteilhaft wird mit der Überwachungseinrichtung eine Gefahrenbereichsüberwachung an einer mobilen Maschine durchgeführt.

Insbesondere ist die mobile Maschine ein mobiler Roboter oder ein fahrerloses Transportfahrzeug.

Zur Durchführung der Schutzfeldüberwachung ist vorteilhaft eine dem optischen Sensor zugeordnete Auswerteeinheit vorgesehen, die im optischen Sensor integriert sein kann oder eine externe Einheit bilden kann.

Generell wird in der Auswerteeinheit abhängig von Sensorsignalen des optischen Sensors ein Schaltsignal generiert, dessen Schaltzustände angeben ob sich ein Objekt im Schutzfeld befindet oder nicht.

Bei einer Objektdetektion im Schutzfeld wird eine Sicherheitsfunktion ausgelöst.

Die Sicherheitsfunktion kann dadurch ausgebildet sein, dass die zu überwachende Anlage oder Maschine stillgesetzt wird. Bei einer Vorfeldüberwachung eines Fahrzeugs besteht die Sicherheitsfunktion darin, das Fahrzeug anzuhalten.

Erfindungsgemäß sind zusätzlich zu dem Schutzfeld zwei Konturerkennungsfelder vorgesehen, die über das Schutzfeld hervorstehen und sich im hervorstehenden Teil nicht oder höchstens teilweise überlappen.

Durch Registrieren von Objekteingriffen in die Konturerkennungsfelder können zulässige Objekte, das heißt nicht gefahrbringende Objekte sicher erkannt werden, bevor sie in das Schutzfeld eindringen.

Wird durch Objekteingriffe in die Konturerkennungsfelder solch ein zulässiges Objekt erkannt, so wird bei nachfolgendem Eindringen dieses Objekts in das Schutzfeld die Auslösung der Sicherheitsfunktion unterdrückt. Dadurch werden unnötige Stillstandzeiten der Maschine oder Anlage, die mit dem optischen Sensor überwacht wird, vermieden, wodurch deren Verfügbarkeit erhöht wird.

Durch die erfindungsgemäße kombinierte Überwachung des Schutzfeldes und der zugeordneten Konturerkennungsfelder wird somit erreicht, dass nur bei Eindringen sicherheitskritischer Objekte, insbesondere Personen in das Schutzfeld die Sicherheitsfunktion ausgelöst wird, nicht jedoch wenn nicht gefahrbringende, zulässige Objekte in das Schutzfeld eindringen.

Ein wesentlicher Aspekt der Erfindung besteht darin, dass für eine Unterdrückung der Sicherheitsfunktion nicht nur das bloße Vorhandensein von Objekteingriffen in den Konturerkennungsfeldern gefordert wird. Vielmehr wird für das Vorhandensein eines zulässigen Objekts eine definierte zeitliche Reihenfolge der Objekteingriffe in die Konturerkennungsfelder derart gefordert, dass innerhalb eines vorgegebenen Zeitintervalls zuerst ein Objekteingriff in einem ersten Konturerkennungsfeld und dann nachfolgend ein Objekteingriff in einem zweiten Konturerkennungsfeld registriert wird.

Das Zeitintervall ist an zu erfassende zulässige Objekte sowie an die Eigenschaften und Installationen des optischen Sensors angepasst.

Dadurch können zulässige Objekte sicher von sicherheitskritischen Objekten unterschieden werden, so dass mit hoher Sicherheit gewährleistet ist, dass die Unterdrückung der Sicherheitsfunktion nur bei Eindringen eines zulässigen Objekts in das Schutzfeld erfolgt.

Die erfindungsgemäße Überwachungseinrichtung bildet vorteilhaft ein Sicherheitssystem, das die Sicherheitsanforderungen für einen Einsatz in sicherheitsrelevanten Applikationen, insbesondere im Bereich des Personenschutzes erfüllt.

Die Komponenten des Sicherheitssystems weisen hierzu einen fehlersicheren Aufbau auf. Dies wird insbesondere durch einen redundanten, mehrkanaligen Aufbau der Auswerteeinheit erreicht.

Die Überwachungseinrichtung umfasst vorteilhaft eine Steuerung, die insbesondere zur Steuerung der mit dem optischen Sensor überwachten Maschine oder Anlage dient. Die Steuerung ist dann als Sicherheitssteuerung ausgebildet und weist ebenfalls einen redundanten, mehrkanaligen Aufbau auf.

Die Auswerteeinheit kann im optischen Sensor integriert sein. Alternativ kann die Auswerteeinheit Bestandteil der Steuerung sein.

Gemäß einer vorteilhaften Ausführungsform ist der optische Sensor ein Flächendistanzsensor.

Dabei weist der Flächendistanzsensor einen Distanzsensor auf, dessen Lichtstrahlen periodisch innerhalb eines Erfassungsbereichs abgelenkt werden.

Vorteilhaft bilden das Schutzfeld und die Konturerkennungsfelder zwei- oder dreidimensionale Bereiche aus.

Zweckmäßig sind die Konturerkennungsfelder streifenförmig ausgebildet.

Mit den so ausgebildeten Konturerkennungsfeldern wird eine lokale, räumlich begrenzte Erfassung von zulässigen Objekten ermöglicht.

Die Konturerkennungsfelder können als unveränderliche Größen im optischen Sensor vorgegeben sein. Alternativ können zeitabhängig und angepasst an die jeweilige Situation der Gefahrenbereichsüberwachung variierende Konturerkennungsfelder vorgegeben werden.

Das Zeitintervall, innerhalb dessen Objekteingriffe in den beiden Konturerkennungsfelder gefordert werden um die Auslösung der Sicherheitsfunktion zu unterdrücken, kann entweder fest vorgegeben sein oder eine veränderliche, parametrierbare Größe sein.

Zweckmäßig wird dieses Zeitintervall in der Auswerteeinheit des optischen Sensors oder in der Steuerung berechnet.

Besonders vorteilhaft ist das Zeitintervall in Abhängigkeit von Applikationsparametern festgelegt.

Durch diese Anpassung des Zeitintervalls an die jeweilige Applikation können zulässige Objekte besonders sicher erkannt und von sicherheitskritischen Objekten unterschieden werden.

Gemäß einer vorteilhaften Ausführungsform ist das Zeitintervall abhängig von einer Zykluszeit des optischen Sensors festgelegt.

Insbesondere entspricht bei einem als Flächendistanzsensor ausgebildeten optischen Sensor die Zykluszeit der Periodendauer der Abtastung des Erfassungsbereichs.

Diese Anpassung trägt vorteilhaft dem Umstand Rechnung, dass durch die Zykluszeit des optischen Sensors dieser zeitlich nacheinander Messwerte generiert. Durch diese Anpassung des Zeitintervalls wird eine Korrelation des Zeitintervalls zur Zykluszeit des optischen Sensors hergestellt, so dass der optische Sensor sicher erkennt, dass die Objekteingriffe in den Konturerkennungsfeldern von demselben zulässigen Objekt stammen.

Diese Anpassung des Zeitintervalls kann noch weitergehend dahin verbessert werden, dass das Zeitintervall abhängig von einer Zykluszeit des optischen Sensors und einer Zykluszeit der Steuerung festgelegt ist.

Die Summe der Zykluszeiten des optischen Sensors und der Steuerung definiert eine Erkennungstoleranz, das heißt eine maximale zeitliche Toleranz zwischen den Zeitpunkten der Obj ekteingriffe in die Konturerkennungsfelder und der Verarbeitung der entsprechenden Sensorsignale des optischen Sensors in der Auswerteeinheit beziehungsweise in der Steuerung.

Für eine optimale Sicherheit bei der Erkennung von zulässigen Objekten ist es sinnvoll, das Zeitintervall auf den doppelten Wert dieser Erkennungstoleranz zu begrenzen.

Wird beispielsweise der optische Sensor zur Vorfeldüberwachung einer mobilen Maschine eingesetzt, die bei ihrer Fahrt schlingern kann, ist es vorteilhaft, das Zeitintervall auf ein Vielfaches der Erkennungstoleranz zu erhöhen.

Bei diesen Ausführungsformen ist es zweckmäßig, wenn die Längen der Konturerkennungsfelder zumindest näherungsweise gleich groß sind.

Nähert sich dem optischen Sensor ein zulässiges Objekt, so erfolgt dann idealerweise im Wesentlichen zeitgleich ein Objekteingriff durch dieses zulässige Objekt in beiden Konturerkennungsfeldern.

Durch die Anpassung des Zeitintervalls an die Erkennungstoleranzen werden Zeitversätze bei der Auswertung der Objekteingriffe ausgeglichen, wodurch gewährleistet ist, dass das zulässige Objekt sicher erkannt wird.

Gemäß einer weiteren vorteilhaften Ausführungsform ist der optische Sensor auf einer mobilen Maschine angeordnet und das Zeitintervall ist abhängig von der Geschwindigkeit der mobilen Maschine festgelegt.

In diesem Fall, insbesondere bei einer Geradeausfahrt der mobilen Maschine, ist es vorteilhaft, wenn die Konturerkennungsfelder unterschiedliche Längen aufweisen.

Entsprechend dem Längenunterschied der Konturerkennungsfelder werden in diesen zeitversetzt Objekteingriffe registriert, wenn die mobile Maschine auf ein Hindernis wie eine Wand als zulässiges Objekt zufährt.

Daran angepasst ist das Zeitintervall durch den Quotienten der Längendifferenz der Konturerkennungsfelder und der Geschwindigkeit der mobilen Maschine bestimmt.

Durch eine derartige Anpassung des Zeitintervalls wird das zulässige Objekt sicher erkannt.

Besonders vorteilhaft ist das Zeitintervall zusätzlich noch an die Zykluszeiten des optischen Sensors und der Steuerung angepasst, wodurch das zulässige Objekt noch sicherer erkannt wird.

Gemäß einer alternativen Ausgestaltung können bei Kurvenfahrten der mobilen Maschine die Konturerkennungsfelder gleiche Längen aufweisen.

Durch die Fahrt der mobilen Maschine entlang einer Kurvenfahrt werden auch bei gleich langen Konturerkennungsfeldern zeitversetzt in diesen Objekteingriffe registriert, wenn die mobile Maschine auf ein Hindernis wie eine Wand zufährt.

Die Erfindung wird im Folgenden anhand der Zeichnungen erläutert. Es zeigen:
- Figur 1:: Erstes Ausführungsbeispiel eines optischen Sensors.
- Figur 2:: Zweites Ausführungsbeispiel eines optischen Sensors.
- Figur 3:: Erstes Ausführungsbeispiel der erfindungsgemäßen Überwachungseinrichtung.
- Figur 4:: Zweites Ausführungsbeispiel der erfindungsgemäßen Überwachungseinrichtung.

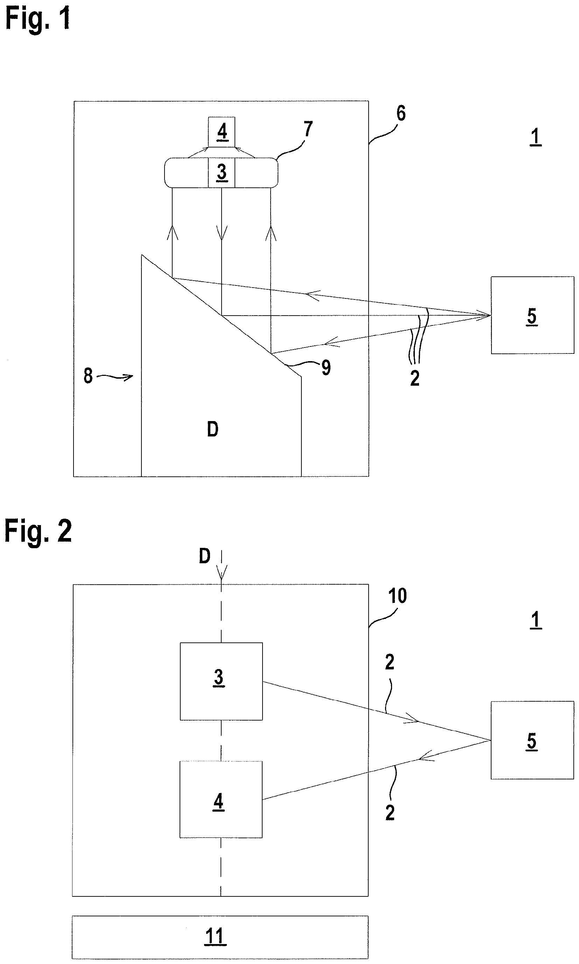

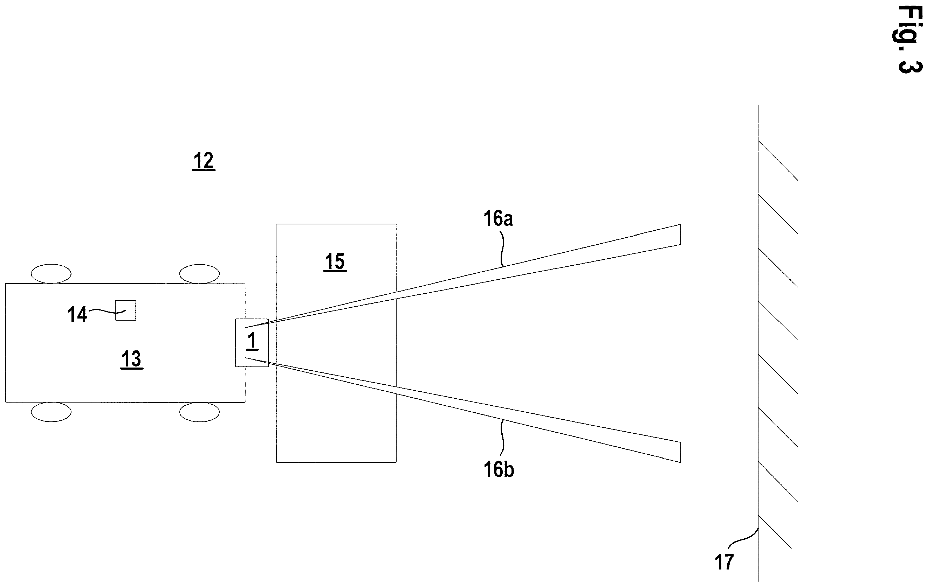

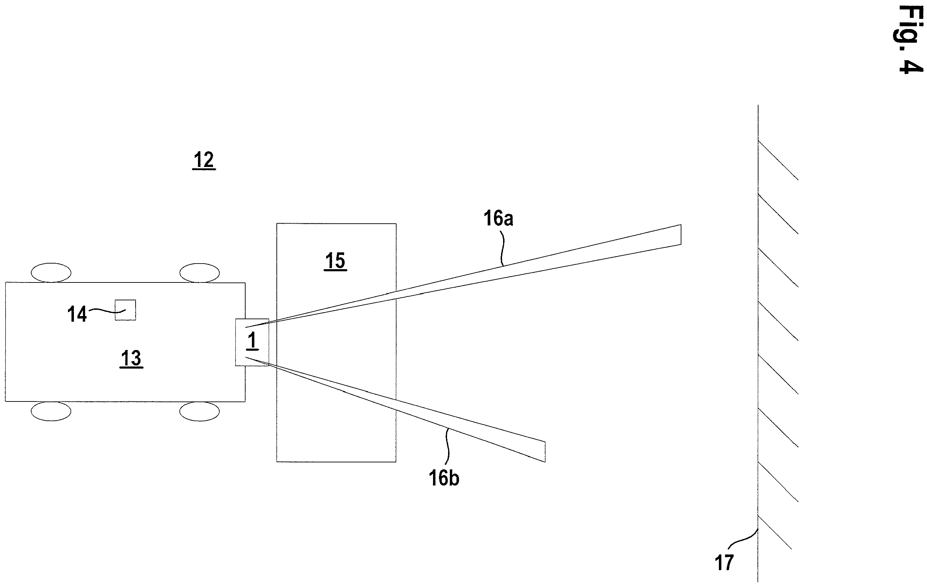

Die Figuren 1 und 2 zeigen Ausführungsbeispiele eines optischen Sensors 1, der erfindungsgemäß für eine Gefahrenbereichsüberwachung an einer mobilen Maschine wie in den Figuren 3 und 4 dargestellt, eingesetzt wird.

Die Figuren 1 und 2 zeigen Ausführungsbeispiele von distanzmessenden optischen Sensoren 1, wobei die Distanzmessungen vorteilhaft nach einem Impuls-Laufzeitverfahren oder einem Phasenmessverfahren erfolgen.

Figur 1 zeigt ein Ausführungsbeispiel eines optischen Sensors 1 in Form eines Flächendistanzsensors, das heißt eines scannenden Distanzsensors. Zur Durchführung von Distanzmessungen weist der optische Sensor 1 einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 1 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor 1 für die Distanzbestimmungen ausgewertet wird.

Wie Figur 1 zeigt, sind die Sensorkomponenten der optischen Sensoren 1 in einem Gehäuse 6 integriert, wobei der Sender 3 sowie der Empfänger 4 mit einer vorgeordneten Empfangsoptik 7 stationär im Gehäuse 6 angeordnet sind. Mit dem optischen Sensor 1 erfolgt eine Objektdetektion in einem flächigen Erfassungsbereich dadurch, dass die Lichtstrahlen 2 mittels einer Ablenkeinheit 8 periodisch abgelenkt werden. Dabei überstreichen die Lichtstrahlen 2 innerhalb einer Periodendauer einen Erfassungsbereich. Die Ablenkeinheit 8 ist motorisch angetrieben und umfasst einen um eine Drehachse D drehbaren Winkelspiegel 9, an dem die Lichtstrahlen 2 abgelenkt werden.

Figur 2 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

Generell ist jedem optischen Sensor 1 eine nicht dargestellte Auswerteeinheit zugeordnet, in der die Empfangssignale des Empfängers 4 ausgewertet werden.

Für den Einsatz im Bereich der Sicherheitstechnik sind die optischen Sensoren 1 gemäß der Figuren 1 und 2 als Sicherheitssensor ausgebildet und weisen einen fehlersicheren Aufbau auf, der beispielsweise durch eine redundante Auswerteeinheit in Form zweier sich zyklisch gegenseitig überwachender Rechnereinheiten realisiert werden kann.

Figur 3 zeigt ein erstes Ausführungsbeispiel der erfindungsgemäßen Überwachungseinrichtung 12 mit einem optischen Sensor 1 wie in den Figuren 1 und 2 beschrieben.

Der optische Sensor 1 befindet sich an der Frontseite einer mobilen Maschine in Form eines fahrerlosen Transportfahrzeugs 13, das von einer sicheren Steuerung 14 gesteuert wird. Die sichere Steuerung 14 übernimmt im vorliegenden Fall auch die Funktion der Auswerteeinheit des optischen Sensors 1 und ist hierzu mit dem optischen Sensor 1 über eine Schnittstelle, beispielsweise mehrere digitale Signale oder einem Feldbus verbunden um bidirektional Daten auszutauschen. Der Datenaustausch zwischen dem optischen Sensor 1 und der Steuerung 14 erfolgt ebenso sicher, beispielsweise über einen sicheren Feldbus.

Mit dem optischen Sensor 1 erfolgt eine Objektüberwachung eines Schutzfeldes 15. Das Schutzfeld 15 ist im vorliegenden Fall als Flächenbereich ausgebildet, der das Vorfeld des fahrerlosen Transportfahrzeugs 13 abdeckt.

Die Schutzfeld-Überwachung erfolgt derart, dass abhängig von einem Objekteingriff in einem Schutzfeld 15 ein binäres Schaltsignal generiert wird, dessen Schaltzustände angeben, ob ein Objekt im Schutzfeld 15 vorhanden ist oder nicht. Ist ein Objekt im Schutzfeld 15 vorhanden, wird durch den entsprechenden Schaltzustand des Schaltsignals eine Sicherheitsfunktion derart ausgelöst, dass eine gefahrbringende Maschine stillgesetzt wird, sodass von dieser keine Gefahren mehr ausgehen können. Im vorliegenden Fall besteht die Sicherheitsfunktion darin, das fahrerlose Transportfahrzeug 13 anzuhalten.

Erfindungsgemäß werden mit dem optischen Sensor 1 auch zwei Konturerkennungsfelder 16a, 16b überwacht. Die Konturerkennungsfelder 16a, 16b sind generell so ausgebildet, dass diese über das Schutzfeld 15 hervorstehen und dort nicht überlappen. Im vorliegenden Fall sind die Konturerkennungsfelder 16a, 16b streifenförmig ausgebildet und stehen nach vorne über das fahrerlose Transportfahrzeug 13 vor. Die Konturerkennungsfelder 16a, 16b weisen identische Formen und insbesondere identische Längen und sind beispielsweise symmetrisch zur Symmetrieachse des fahrerlosen Transportfahrzeugs 13 und des Schutzfeldes 15 angeordnet.

Durch Erfassen von Objekteingriffen in die Konturerkennungsfelder 16a, 16b werden zulässige Objekte, nicht gefahrbringende Objekte erkannt bevor sie in das Schutzfeld 15 eindringen. Im vorliegenden Fall ist das zulässige Objekt von einer Wand 17 gebildet, wobei Figur 3 die Situation zeigt, wo sich das fahrerlose Transportfahrzeug 13 mit einer Geschwindigkeit v auf die Wand 17 zubewegt.

Erfindungsgemäß wird das Auslösen einer Sicherheitsfunktion bei Registrieren eines Objekteingriffs in das Schutzfeld 15 dann unterbrochen, wenn zuvor innerhalb eines Zeitintervalls Z zuerst im ersten Konturerkennungsfeld 16a und dann im zweiten Konturerkennungsfeld 16b ein Objekteingriff registriert wird. Alternativ kann der Objekteingriff auch zuerst im Konturerkennungsfeld 16b und dann im Konturerkennungsfeld 16a registriert werden oder die Objekteingriffe in die Konturerkennungsfelder 16a, 16b werden zeitgleich registriert. Damit wird berücksichtigt, dass trotz der gleichen Dimensionen der Konturerkennungsfelder 16a, 16b die Wand 17 als zulässiges Objekt in diesen nicht exakt gleichzeitig erfasst wird, und zwar aufgrund einer Erkennungstoleranz des optischen Sensors 1 und der Steuerung 14.

Diese ergibt sich durch die Zykluszeit *Z*₁ des optischen Sensors 1 und der Zykluszeit *Z*₂ der Steuerung 14. Die Zykluszeit des optischen Sensors 1 entspricht im Wesentlichen der Periodendauer der Abtastung des Erfassungsbereichs mittels der Lichtstrahlen 2 des optischen Sensors 1. Werden die Lichtstrahlen 2 des optischen Sensors 1 beispielsweise im Uhrzeigersinn geführt, erfolgt zuerst die Abtastung des ersten Konturerkennungsfelds 16a und zeitlich versetzt darauf die Abtastung des zweiten Konturerkennungsfelds 16b.

Dementsprechend ergibt sich ein Zeitintervall *Z_{E}* einer Erkennungstoleranz, das durch die Summe der Zykluszeiten *Z*₁, *Z*₂ des optischen Sensors 1 und der Steuerung 14 gegeben ist: *Z_{E}* = *Z*₁ + *Z*₂.

Für eine optimale Sicherheit für die Erfassung des zulässigen Objekts hat es sich als zweckmäßig erwiesen, für das Zeitintervall Z den doppelten Wert des Zeitintervalls der Erkennungstoleranz zu wählen: Z = 2 · *Z_{E}*.

Figur 4 zeigt eine Abwandlung der Ausführungsform derart, dass das erste Konturerkennungsfeld 16a länger ist als das zweite Konturerkennungsfeld 16b. Ansonsten entspricht die Ausführungsform gemäß Figur 4 der Ausführungsform gemäß Figur 3.

Durch die unterschiedlichen Längen *Lₐ*, *L_{b}* der Konturerkennungsfelder 16a, 16b wird in diesen die Wand 17 als zulässiges Objekt um eine Differenzzeit *T_{D}* versetzt erkennbar, wobei diese definiert ist gemäß *T_{D}* = (*Lₐ* - *L_{b}*)/*v*, wobei *υ* die Geschwindigkeit des fahrerlosen Transportfahrzeugs 13 ist.

In diesem Fall ist es zweckmäßig diese Differenz mit *T_{D}* in das Zeitintervall *Z* gemäß der folgenden Gleichung miteinzubeziehen. *Z* = 2 · *Z_{E}* + *T_{D}.*

In diesem Fall ergibt sich ein minimaler Wert für das Zeitintervall Z von *Zₘᵢₙ* = *T_{D}* - *Z_{E}* und ein maximaler Wert für das Zeitintervall Z von *Zₘₐₓ* = *T_{D}* - *Z_{E}.*

Bei Applikationen, in denen die mobile Maschine beispielsweise schlingert, kann eine längere Zykluszeit von Vorteil sein, da es in diesem Fall sein kann, dass die Konturerkennungsfelder 16a, 16b nicht zu gleichen oder nahezu gleichen Zeitpunkten unterbrochen werden. Die Parametrierung des Zeitintervalls als Vielfaches der Erkennungstoleranz oder eines frei wählbaren Werts ist dann vorteilhaft.

Generell wird das Zeitintervall im optischen Sensor 1 oder in der Steuerung 14 berechnet, wobei das Zeitintervall eine fest vorgegebene Größe oder ein veränderlicher Parameterwert sein kann, wobei das Zeitintervall vorteilhaft aus Applikationsparameter der jeweiligen Applikation bestimmt wird.

### Bezugszeichenliste

- (1): Optischer Sensor
- (2): Lichtstrahl
- (3): Sender
- (4): Empfänger
- (5): Objekt
- (6): Gehäuse
- (7): Empfangsoptik
- (8): Ablenkeinheit
- (9): Winkelspiegel
- (10): Messkopf
- (11): Sockel
- (12): Überwachungseinrichtung
- (13): Fahrerloses Transportfahrzeug
- (14): Steuerung
- (15): Schutzfeld
- (16a): Konturerkennungsfeld
- (16b): Konturerkennungsfeld
- (17): Wand

- D: Drehachse

## Patentansprüche

1. Überwachungseinrichtung (12) mit einem optischen Sensor (1), mittels dessen eine Objektüberwachung innerhalb eines Schutzfeldes (15) durchgeführt wird, wobei mit dem optischen Sensor (1) zusätzlich eine Objektüberwachung innerhalb zweier Konturerkennungsfelder (16a, 16b) durchgeführt wird, wobei die Konturerkennungsfelder (16a, 16b) über das Schutzfeld (15) hervorstehen und dort zumindest teilweise nicht überlappen, dass eine Auswerteeinheit vorgesehen ist, in welcher bei Registrieren eines Objekteingriffs im Schutzfeld (15) eine Sicherheitsfunktion ausgelöst wird, **dadurch gekennzeichnet, dass** diese Sicherheitsfunktion dann unterdrückt wird, wenn zuvor innerhalb eines vorgegebenen Zeitintervalls zuerst in einem ersten Konturerkennungsfeld (16a) und dann im zweiten Konturerkennungsfeld (16b) ein Objekteingriff registriert wurde.

2. Überwachungseinrichtung (12) nach Anspruch 1, **dadurch gekennzeichnet, dass** der optische Sensor (1) ein Flächendistanzsensor ist, wobei der Flächendistanzsensor einen Distanzsensor aufweist, dessen Lichtstrahlen (2) periodisch innerhalb eines Erfassungsbereichs abgelenkt werden.

3. Überwachungseinrichtung (12) nach einem der Ansprüche 1 oder 2, **dadurch gekennzeichnet, dass** das Schutzfeld (15) und die Konturerkennungsfelder (16a, 16b) zwei- oder dreidimensionale Bereiche ausbilden.

4. Überwachungseinrichtung (12) nach einem der Ansprüche 1 bis 3, **dadurch gekennzeichnet, dass** die Konturerkennungsfelder (16a, 16b) streifenförmig ausgebildet sind.

5. Überwachungseinrichtung (12) nach einem der Ansprüche 1 bis 4, **dadurch gekennzeichnet, dass** die Auswerteeinheit im optischen Sensor (1) integriert ist oder eine externe Einheit ausbildet.

6. Überwachungseinrichtung (12) nach einem der Ansprüche 1 bis 5, **dadurch gekennzeichnet, dass** diese eine Steuerung (14) aufweist, wobei diese die Auswerteeinheit ausbildet.

7. Überwachungseinrichtung (12) nach einem der Ansprüche 1 bis 6, **dadurch gekennzeichnet, dass** das Zeitintervall fest vorgegeben berechnet wird, oder parametrierbar ist.

8. Überwachungseinrichtung (12) nach Anspruch 7, **dadurch gekennzeichnet, dass** das Zeitintervall im optischen Sensor (1) oder in einer Steuerung berechnet wird.

9. Überwachungseinrichtung (12) nach einem der Ansprüche 1 bis 8, **dadurch gekennzeichnet, dass** das Zeitintervall in Abhängigkeit von Applikationsparametern festgelegt ist.

10. Überwachungseinrichtung (12) nach Anspruch 9, **dadurch gekennzeichnet, dass** das Zeitintervall abhängig von einer Zykluszeit des optischen Sensors (1) oder der Steuerung festgelegt ist.

11. Überwachungseinrichtung (12) nach Anspruch 9, **dadurch gekennzeichnet, dass** bei einem als Flächendistanzsensor ausgebildeten optischen Sensor (1) die Zykluszeit der Periodendauer der Abtastung des Erfassungsbereichs entspricht.

12. Überwachungseinrichtung (12) nach einem der Ansprüche 1 bis 11, **dadurch gekennzeichnet, dass** die Längen der Konturerkennungsfelder (16a, 16b) zumindest näherungsweise gleich groß sind oder unterschiedliche Längen aufweisen.

13. Überwachungseinrichtung (12) nach einem der Ansprüche 1 bis 12, **dadurch gekennzeichnet, dass** der optische Sensor (1) auf einer mobilen Maschine angeordnet ist, und dass das Zeitintervall abhängig von der Geschwindigkeit der mobilen Maschine festgelegt ist.

14. Überwachungseinrichtung (12) nach Anspruch 13, **dadurch gekennzeichnet, dass** die Konturerkennungsfelder unterschiedliche Längen aufweisen und das Zeitintervall durch den Quotienten der Längendifferenz der Konturerkennungsfelder (16a, 16b) und der Geschwindigkeit der mobilen Maschine bestimmt ist, oder dass bei Kurvenfahrten der mobilen Maschine die Konturerkennungsfelder (16a, 16b) gleiche Längen aufweisen.

15. Überwachungseinrichtung (12) nach einem der Ansprüche 1 bis 14, **dadurch gekennzeichnet, dass** dieses ein Sicherheitssystem ist.

## Claims

1. A monitoring device (12) with an optical sensor (1), by means of which object monitoring is carried out within a protective field (15), wherein object monitoring is additionally carried out with the optical sensor (1) within two contour recognition fields (16a, 16b), wherein the contour recognition fields (16a, 16b) project beyond the protective field (15) and do not overlap there at least partially,
wherein an evaluation unit is provided in which a safety function is triggered when an object intervention is registered in the protective field (15), **characterised in that** this safety function is suppressed if an object intervention was previously registered first in a first contour detection field (16a) and then in the second contour detection field (16b) within a predetermined time interval.

2. A monitoring device (12) according to claim 1, **characterised in that** the optical sensor (1) is an area distance sensor, wherein the area distance sensor has a distance sensor whose light beams (2) are periodically deflected within a detection area.

3. A monitoring device (12) according to one of claims 1 or 2, **characterised in that** the protective field (15) and the contour detection fields (16a, 16b) form two- or three-dimensional areas.

4. A monitoring device (12) according to one of claims 1 to 3, **characterised in that** the contour detection fields (16a, 16b) are strip-shaped.

5. A monitoring device (12) according to one of claims 1 to 4, **characterised in that** the evaluation unit is integrated in the optical sensor (1) or forms an external unit.

6. A monitoring device (12) according to one of claims 1 to 5, **characterised in that** it has a controller (14), which forms the evaluation unit.

7. A monitoring device (12) according to one of claims 1 to 6, **characterised in that** the time interval is calculated in a fixed predetermined manner or can be parameterised.

8. A monitoring device (12) according to claim 7, **characterised in that** the time interval is calculated in the optical sensor (1) or in a control unit.

9. A monitoring device (12) according to one of claims 1 to 8, **characterised in that** the time interval is defined as a function of application parameters.

10. A monitoring device (12) according to claim 9, **characterised in that** the time interval is defined as a function of a cycle time of the optical sensor (1) or of the controller.

11. A monitoring device (12) according to claim 9, **characterised in that**, in the case of an optical sensor (1) designed as an area distance sensor, the cycle time corresponds to the period duration of the scanning of the detection area.

12. A monitoring device (12) according to one of claims 1 to 11, **characterised in that** the lengths of the contour detection fields (16a, 16b) are at least approximately the same size or have different lengths.

13. A monitoring device (12) according to one of claims 1 to 12, **characterised in that** the optical sensor (1) is arranged on a mobile machine, and **in that** the time interval is fixed as a function of the speed of the mobile machine.

14. A monitoring device (12) according to claim 13, **characterised in that** the contour detection fields have different lengths and the time interval is determined by the quotient of the difference in length of the contour detection fields (16a, 16b) and the speed of the mobile machine, or **in that** the contour detection fields (16a, 16b) have the same lengths when the mobile machine is travelling around curves.

15. A monitoring device (12) according to one of claims 1 to 14, **characterised in that** this is a safety system.

## Revendications

1. Dispositif de surveillance (12) avec un capteur optique (1), au moyen duquel la surveillance d'objets est effectuée dans un champ de protection (15), dans lequel la surveillance d'objets est en outre effectuée avec le capteur optique (1) dans deux champs de reconnaissance de contour (16a, 16b), dans lequel les champs de reconnaissance de contour (16a, 16b) se projettent au-delà du champ de protection (15) et ne s'y chevauchent pas au moins partiellement,
dans lequel une unité d'évaluation est fournie dans laquelle une fonction de sécurité est déclenchée lorsqu'une intervention d'objet est enregistrée dans le champ de protection (15), **caractérisée en ce que** cette fonction de sécurité est supprimée si une intervention d'objet a été précédemment enregistrée d'abord dans un premier champ de détection de contour (16a) puis dans le second champ de détection de contour (16b) dans un intervalle de temps prédéterminé.

2. Dispositif de surveillance (12) selon la revendication 1, **caractérisé en ce que** le capteur optique (1) est un capteur de distance de surface, dans lequel le capteur de distance de surface comporte un capteur de distance dont les faisceaux lumineux (2) sont périodiquement déviés à l'intérieur d'une zone de détection.

3. Dispositif de surveillance (12) selon l'une des revendications 1 ou 2, **caractérisé en ce que** le champ de protection (15) et les champs de détection de contour (16a, 16b) forment des zones bidimensionnelles ou tridimensionnelles.

4. Dispositif de surveillance (12) selon l'une des revendications 1 à 3, **caractérisé en ce que** les champs de détection de contour (16a, 16b) sont en forme de bande.

5. Dispositif de surveillance (12) selon l'une des revendications 1 à 4, **caractérisé en ce que** l'unité d'évaluation est intégrée dans le capteur optique (1) ou forme une unité externe.

6. Dispositif de surveillance (12) selon l'une des revendications 1 à 5, **caractérisé en ce qu'**il comporte un dispositif de commande (14), qui constitue l'unité d'évaluation.

7. Dispositif de surveillance (12) selon l'une des revendications 1 à 6, **caractérisé en ce que** l'intervalle de temps est calculé d'une manière fixe prédéterminée ou peut être paramétré.

8. Dispositif de surveillance (12) selon la revendication 7, **caractérisé en ce que** l'intervalle de temps est calculé dans le capteur optique (1) ou dans une unité de commande.

9. Dispositif de surveillance (12) selon l'une des revendications 1 à 8, **caractérisé en ce que** l'intervalle de temps est défini en fonction des paramètres d'application.

10. Dispositif de surveillance (12) selon la revendication 9, **caractérisé en ce que** l'intervalle de temps est défini en fonction d'un temps de cycle du capteur optique (1) ou du dispositif de commande.

11. Dispositif de surveillance (12) selon la revendication 9, **caractérisé en ce que**, dans le cas d'un capteur optique (1) conçu comme un capteur de distance de surface, le temps de cycle correspond à la durée de la période de balayage de la zone de détection.

12. Dispositif de surveillance (12) selon l'une des revendications 1 à 11, **caractérisé en ce que** les longueurs des champs de détection de contour (16a, 16b) sont au moins approximativement de la même taille ou ont des longueurs différentes.

13. Dispositif de surveillance (12) selon l'une des revendications 1 à 12, **caractérisé en ce que** le capteur optique (1) est disposé sur une machine mobile, et **en ce que** l'intervalle de temps est fixé en fonction de la vitesse de la machine mobile.

14. Dispositif de surveillance (12) selon la revendication 13, **caractérisé en ce que** les champs de détection des contours ont des longueurs différentes et que l'intervalle de temps est déterminé par le quotient de la différence de longueur des champs de détection des contours (16a, 16b) et de la vitesse de la machine mobile, ou **en ce que** les champs de détection des contours (16a, 16b) ont les mêmes longueurs lorsque la machine mobile se déplace dans des courbes.

15. Dispositif de surveillance (12) selon l'une des revendications 1 à 14, **caractérisé en ce qu'**il s'agit d'un système de sécurité.
